# FASCICULE DE BREVET EUROPEEN

(11) **EP 2 761 612 B1**
(45) Date de publication et mention de la délivrance du brevet: **09.12.2020**
(21) Numéro de dépôt: 12762587.9
(22) Date de dépôt: 21.09.2012
(51) Int. Cl.: F21S 41/50, F21S 41/275, F21S 43/145, G09G 3/34, G09F 3/00, F21S 41/20, B60R 13/00

(54) **Unité optique avec une PIECE POUR VEHICULE AUTOMOBILE COMPORTANT UNE PORTION RECOUVERTE D'ENCRE ÉLECTRONIQUE**
Optische Einheit mit einem TEIL FÜR KRAFTFAHRZEUG MIT EINEM ELEMENT MIT ÜBERZUG AUS ELEKTRONISCHER TINTE
Optical unit comprising a PART FOR AUTOMOTIVE VEHICLE COMPRISING AN ELEMENT COVERED IN ELECTRONIC INK

(30) Priorité: 27.09.2011 FR 1158649
(43) Date de publication de la demande: 06.08.2014
(73) Titulaire: Valeo Vision, 93012 Bobigny Cedex (FR)
(72) Inventeur: ALBOU, Pierre, 75013 Paris (FR); PUENTE, Jean-Claude, 93190 Livry-Gargan (FR)
(86) Numéro de dépôt international: PCT/EP2012/068702
(87) Numéro de publication internationale: WO 2013/045372

(56) Documents cités:
- EP-A1- 1 806 714
- EP-A2- 0 704 342
- WO-A1-2005/098510
- WO-A2-2005/082671
- DE-A1-102008 042 184
- US-B1- 6 473 072

## Description

La présente invention porte notamment sur une unité optique comprenant une pièce de véhicule automobile ainsi qu'un procédé de fabrication de cette unité optique.

La personnalisation des véhicules automobiles est un aspect qui revêt une importance croissante chez les utilisateurs de véhicule et acheteurs potentiels.

Cette personnalisation concerne également l'aspect esthétique des véhicules. Les configurateurs proposés sur les sites internet de la plupart des constructeurs automobile, en sont de bons exemples. Outre le choix de la couleur du véhicule, il est possible d'ajouter des baguettes chromées en divers emplacements. Il est également possible de différencier son véhicule par le visuel procuré par la fonction de signalisation de jour, cette fonction constituant une véritable signature visuelle permettant d'identifier aisément un type de véhicule ou une marque.

Ces possibilités de personnalisation du véhicule conduisent à un très grand nombre de combinaisons possibles, générant de ce fait de lourdes contraintes de logistique et de stock. Néanmoins, il existe une demande pour personnaliser encore plus les véhicules, notamment lorsqu'ils ne sont pas en fonctionnement. Par exemple, certains utilisateurs personnalisent les masques de projecteurs. Pour rappel, un projecteur comprend habituellement un boîtier coopérant avec une glace de protection pour loger une source lumineuse associée à un réflecteur. Un masque est généralement disposé entre la glace et le réflecteur pour masquer les composants du projecteur disposés en arrière du réflecteur et les portions du boîtier qui seraient visibles lors des débattements du réflecteur provoqués par le système de correction de portée. Le masque peut présenter une surface non négligeable. Il est possible de les personnaliser visuellement.

Des solutions connues consistent ainsi à coller sur le masque des étiquettes visibles depuis l'extérieur et portant un motif. Les étiquettes sont collées lors de la fabrication du projecteur, typiquement avant de sceller la glace de ce dernier. Ces solutions présentent un inconvénient en terme de fiabilité. En effet, au cours du temps en raison des cycles thermiques d'amplitude élevée et des entrées d'humidité inévitables dus au fonctionnement du projecteur, les étiquettes ont tendance à se décoller ce qui peut s'avérer préjudiciable si elles viennent occulter la source de lumière ou pire, si elles s'enflamment au contact de cette dernière.

D'autres solutions prévoient de graver les masques au moyen d'outillages dédiés. Pour chaque motif un outillage doit être réalisé. Ces outillages représentant un investissement significatif, ces solutions ne sont pas adaptées aux petites séries et induisent des coûts importants.

D'autres solutions consistent à marquer les masques par laser. La durée de réalisation de chaque masque et le coût de revient sont prohibitifs.

Ainsi, les solutions techniques connues ne permettent donc pas de fortement personnaliser des pièces de véhicules, tels que des masques de projecteur, pour des petites et moyennes séries tout en maintenant des coûts limités.

Par ailleurs, le document DE 10 2008 042 184 A1 montre qu'il est connu d'utiliser de l'encre électronique sur un réflecteur afin de contrôler le faisceau d'éclairage émis par un projecteur.

La présente invention vise à limiter au moins certains des inconvénients que présentent les solutions existantes. Plus particulièrement, elle vise à apporter une solution technique permettant de faciliter la personnalisation de pièces de véhicule, telles que des masques de projecteur par exemple, tout en réduisant les coûts d'obtention.

A cet effet, on prévoit selon l'invention une unité optique comprenant au moins une pièce de véhicule automobile , l'unité optique étant telle que définie dans la revendication 1.

Une portion visible depuis l'extérieur de la pièce, est en partie au moins recouverte d'encre électronique apte à former un motif sur la portion.

Ainsi, l'encre ou le papier électronique est visible depuis l'extérieur de la pièce.

Un motif peut être affiché par l'encre électronique sur la portion visible de la pièce. La variété de motifs qui peuvent être affichés étant très grand, le degré de personnalisation de la pièce est également considérable.

En outre, le motif est rémanent en l'absence de toute utilisation du véhicule et en l'absence de toute alimentation en courant. Le motif demeure donc lorsque le véhicule n'est pas en fonctionnement. Par ailleurs l'encre électronique permet d'afficher des motifs parfaitement visibles même par luminosité relativement faible.

L'invention permet ainsi de personnaliser la pièce concernée de manière aisée et à moindre coût puisque aucun outillage spécifique d'un motif n'est nécessaire.

De manière facultative, la pièce selon l'invention peut en outre comprendre au moins l'une quelconque des caractéristiques optionnelles suivantes :
L'encre électronique est agencée sous forme de papier électronique. Elle est contenue dans une feuille qui est appliquée sur la paroi visible. Ce mode de réalisation présente un intérêt en terme de simplicité de dépôt. En outre, elle ne nécessite pas d'outillage dédié.

Selon une alternative, l'encre électronique, comprenant au moins une couche active et une électrode, est déposée directement sur la portion de la pièce. Avantageusement, ce mode de réalisation présente une tenue dans le temps améliorée.

La pièce est configurée pour être intégrée dans une unité optique apte à assurer une fonction de signalisation du véhicule ou une fonction d'éclairage.

Selon l'invention, la portion visible est agencée pour participer uniquement à l'aspect esthétique de l'unité, c'est-à-dire que la portion visible ne participe pas à la fonction de signalisation ou d'éclairage.

Suivant un mode de réalisation de l'invention, la pièce forme un masque pour l'unité optique. De préférence, le masque comprend au moins une ouverture conformée pour loger au moins en partie une source lumineuse et un système optique associé à la source lumineuse. Préférentiellement, le masque est conformé pour coopérer avec une glace externe de l'unité optique ou pour être logé entre la glace et le système optique.

Avantageusement, le système optique a pour fonction de former le faisceau. Le système optique peut être une lentille ou un réflecteur.

Avantageusement, la portion recouverte en partie au moins par l'encre est portée par une paroi du masque sensiblement perpendiculaire à la direction principale d'avancée du véhicule. De manière alternative ou cumulée, le masque comprend une portion recouverte d'encre et qui est sensiblement horizontale.

La pièce peut également former une partie d'une glace de l'unité optique.

La pièce peut également former une partie d'un boîtier de l'unité optique.

Typiquement, l'encre électronique ou le papier électronique est disposé sur une face interne de la glace ou du boîtier, c'est-à-dire une face destinée à être tournée vers l'intérieur du projecteur ou de l'unité optique.

La pièce comprend des moyens de connexion associés à l'encre électronique et adaptés pour coopérer avec des moyens de programmation configurés pour créer ou modifier un motif formé par l'encre électronique. Ainsi, la pièce peut être connectée à une unité de programmation pour définir un motif sur l'encre recouvrant la portion visible.

La pièce comprend une carte électronique ou un boîtier électronique configuré pour effectuer un contrôle d'accès de sorte à empêcher ou autoriser la création ou la modification du motif. Typiquement, la carte électronique vérifie que la personne qui demande une création ou une modification du motif est autorisée. Cette vérification peut se faire au moyen d'un code, d'une carte sécurisée type carte magnétique ou carte à puce, d'une reconnaissance du terminal utilisée pour effectuer la demande etc.

La pièce comprend une carte électronique et des ports configurés pour permettre un interfaçage avec un ordinateur. Par exemple, la pièce comprend des ports USB (Universal Serial Bus ou Bus Série Universel).

Le motif comprend au moins l'un parmi : une homologation, un marquage réglementaire, un logo, un signe abstrait, un signe concret, un chiffre, une lettre.

L'encre électronique est agencée pour produire au moins un motif de couleur, c'est-à-dire une couleur autre que le noir et le blanc. Par exemple, l'encre est sous forme d'un papier électronique muni de filtres de couleur. Alternativement, l'encre comprend des micro capsules d'une couleur autre que le blanc ou le noir.

On peut prévoir un jeu de pièces selon l'une quelconque des caractéristiques précédentes, les pièces du jeu étant configurées pour équiper simultanément le même véhicule.

Ainsi, un même véhicule est équipé simultanément de plusieurs pièces selon la présente invention. Par exemple, le véhicule comprend des pièces intégrées au niveau d'unités optiques disposées à l'avant et/ou à l'arrière et/ou en partie au moins sur les ailes du véhicule.

On peut prévoir un ensemble de marquage comprenant au moins une pièce selon l'une quelconque des caractéristiques précédentes et comprenant des moyens de programmation configurés pour être connectés à la pièce et pour créer ou modifier un motif formé par l'encre électronique.

Selon l'invention, on prévoit une unité optique comprenant au moins une pièce selon l'une quelconque des caractéristiques précédentes. Ainsi, l'invention concerne une unité optique comprenant une portion visible depuis l'extérieur, la portion visible étant recouverte au moins en partie d'un papier électronique ou d'une encre électronique.

De manière facultative, l'unité optique selon l'invention peut en outre comprendre au moins l'une quelconque des caractéristiques optionnelles suivantes :
L'unité optique est conformée pour être disposée à l'avant du véhicule. Alternativement, l'unité optique est conformée pour être disposée à l'arrière du véhicule. De manière alternative ou cumulée aux deux modes de réalisation précédents, l'unité optique s'étend sur les ailes du véhicule.

L'encre ou le papier électronique est visible depuis l'extérieur de l'unité optique.

L'unité optique comprend un boîtier coopérant avec une glace pour loger au moins une source de lumière ainsi qu'au moins un masque et dans lequel la paroi recouverte par l'encre électronique est portée par le masque ou par la glace. Typiquement, l'unité optique comprend au moins un système optique associé à la source de lumière. La paroi recouverte d'encre électronique est située entre le système optique et la glace.

Avantageusement, le système optique a pour fonction de former le faisceau. Typiquement il comprend ou est un réflecteur. Il peut également comprendre une lentille associée à la source lumineuse.

L'unité optique comprend des moyens de connexion connectés à l'encre électronique, les moyens de connexion comprenant un connecteur conformé pour être connecté à des moyens de programmation de sorte à pouvoir programmer par l'intermédiaire des moyens de programmation le motif à afficher par l'encre électronique.

Selon une première option avantageuse, les moyens de connexion sont inaccessibles depuis l'extérieur de l'unité optique. La modification du motif est ainsi rendue impossible sauf à ouvrir l'unité optique.

Selon une deuxième option avantageuse, les moyens de connexion sont accessibles depuis l'extérieur de l'unité optique. La modification du motif est ainsi rendue possible sans avoir à ouvrir l'unité optique. Cette option est particulièrement avantageuse pour permettre une personnalisation encore plus poussée ou modifiable de la pièce sans pour autant introduire de fortes contraintes sur l'étanchéité de l'unité optique puisque cette dernière n'est pas ouverte.

Avantageusement, le connecteur forme une fiche portée par le boîtier et adaptée pour être connectée à une fiche complémentaire des moyens de programmation.

Selon un autre aspect, l'invention concerne un véhicule automobile comprenant une unité optique selon l'une quelconque de caractéristiques précédentes. De préférence, l'encre ou le papier électronique est visible depuis l'extérieur du véhicule.

Selon un autre aspect, l'invention concerne un procédé de fabrication d'une unité optique comprenant au moins une pièce de véhicule automobile, la pièce comprenant une portion visible depuis l'extérieur de la pièce, le procédé comprenant une étape de recouvrement d'une partie au moins de la portion par une encre électronique.

Selon un mode de réalisation particulier, on connecte l'encre électronique à des moyens de connexion conformés pour coopérer avec des moyens de programmation configurés pour créer ou modifier un motif formé par l'encre électronique, le procédé comprenant, une étape de programmation de l'encre électronique de sorte à faire apparaître sur la portion un motif ou un signe alphanumérique.

Selon un autre aspect, l'invention concerne un procédé de fabrication d'une unité optique constituant un sous-ensemble de véhicule automobile et intégrant une pièce selon l'invention, la pièce comportant des moyens de connexion conformés pour coopérer avec des moyens de programmation, le procédé comprenant : une étape de connexion des moyens de connexion avec des moyens de programmation ; une étape de programmation de l'encre électronique de sorte à faire apparaître sur la portion un motif ; une étape d'intégration de la pièce dans un sous-ensemble réalisée avant ou après les étapes de connexion et de programmation.

Selon un premier mode de réalisation, l'étape d'intégration de la pièce dans le sous-ensemble est réalisée après les étapes de connexion et de programmation et de manière à ce qu'au terme de l'étape d'intégration les moyens de connexion sont rendus inaccessibles. Ainsi, après la programmation, il n'est plus possible d'accéder à l'encre électronique de sorte à occulter ou altérer le motif. L'étape d'intégration du sous-ensemble est effectuée de sorte que l'accès aux moyens de connexion altère irréversiblement le sous-ensemble. Typiquement, l'étape d'intégration du sous-ensemble comprend une étape de scellement ou une étape d'encliquetage et l'ouverture ultérieure du sous-ensemble provoque la détérioration du sous ensemble ou de la pièce ou d'une étanchéité du sous-ensemble.

Selon un deuxième mode de réalisation, l'étape d'intégration de la pièce dans un sous-ensemble est réalisée de manière à ce qu'au terme de l'étape d'intégration les moyens de connexion sont accessibles depuis l'extérieur du sous-ensemble. La programmation du motif peut ainsi être effectuée sans avoir à démonter le sous-ensemble.

Selon une option avantageuse, l'étape de programmation est réalisée sur une ligne de production ou d'assemblage du sous-ensemble intégrant la pièce et avant finalisation du véhicule. Typiquement, la programmation du motif est effectuée en série lors de la fabrication du sous-ensemble qui sera ensuite monté sur un véhicule Par exemple, la programmation peut concerner le marquage réglementaire des unités optiques. Ce marquage peut ainsi être effectué le plus tard possible mais avant finalisation de l'unité optique et avant son intégration dans le véhicule. On peut ainsi déterminer dans quelle unité optique une pièce donnée va être assemblée. On est ainsi en mesure d'adapter le marquage ou l'homologation de cette pièce en fonction de l'unité optique voire du véhicule dans lequel cette pièce va être intégrée. Par exemple, pour une unité optique ou pour un véhicule dédié au marché britannique, la pièce sera marquée conformément aux réglementations britanniques. On est ainsi assuré d'attribuer à chaque pièce, typiquement un masque ou une glace, le marquage qui lui est approprié de manière simple et sans avoir à constituer des stocks importants. Actuellement, dans la pratique, le marquage des pièces constituant les unité optiques est effectué très en amont de l'assemblage de l'unité optique et a fortiori très en amont de l'intégration de l'unité optique dans le véhicule. Il en résulte des inadéquations de marquage conduisant à un gaspillage de pièces d'unités optiques. Pour éviter ce gaspillage certains constructeurs constituent des stocks importants de pièces présentant des marquages différents, ce qui conduit inévitablement à une gestion non optimale des stocks et à une rentabilité réduite. Par ailleurs les marquages sur les glaces sont généralement réalisés par moulage et on doit donc disposer d'outillages nombreux et spécifiques au différents trafics (conduite à gauche, conduite à droite européenne, conduite à droite aux états unis, etc).

Selon une autre option avantageuse, l'étape de programmation est effectuée après finalisation du véhicule. Typiquement, l'étape de connexion et l'étape de programmation sont effectuées dans un atelier de customisation de véhicules, dans un garage ou par l'utilisateur du véhicule. Avantageusement, on peut modifier le motif au cours de la durée de vie du véhicule ou du sous-ensemble Le motif n'est donc pas définitif contrairement aux solutions connues consistant à graver le masque.

D'autres caractéristiques, buts et avantages de la présente invention apparaîtront à la lecture de la description détaillée qui va suivre, et en regard des dessins annexés, donnés à titre d'exemples non limitatifs et sur lesquels :
La figure 1 est un schéma illustrant une coupe d'une unité optique selon une section transversale et comprenant une pièce selon un exemple de réalisation de l'invention, la pièce constituant un masque pour unité optique dans cet exemple.
La figure 2 est une vue en perspective d'un masque selon un exemple de réalisation de l'invention, ce masque étant apte à être intégré dans l'unité de la figure 1.
Les figures 3a et 3b représentent deux modes de réalisation d'un masque selon l'invention dans lesquels les masques présentent chacun un connecteur.
La figure 4 illustre l'unité optique selon la figure 1 et dans laquelle la face interne de la glace est en partie recouverte d'encre électronique.

Il est précisé que, dans le cadre de la présente demande de brevet, le terme « recouvrir » ne signifie pas obligatoirement « au contact de ». Ainsi par exemple, le dépôt d'une encre électronique ou d'un papier électronique sur une portion d'une pièce ne signifie pas obligatoirement que l'encre électronique ou que le papier électronique est directement au contact de la portion mais cela signifie que l'encre électronique ou que le papier électronique recouvre au moins partiellement ladite portion en étant soit directement à son contact soit en étant séparé d'elle par une autre couche ou film.

Dans la présente demande de brevet, on qualifie de motif toute forme visuelle formée par l'encre électronique. Le motif peut comporter au moins l'un parmi : un objet concret, un objet abstrait, un logo, un ou plusieurs caractères alphanumériques, une ou plusieurs signes ayant une signification dans une langue quelconque.

On rappelle qu'une encre électronique est un matériau composé de très nombreuses capsules, typiquement des millions de capsules, dont la position ou l'orientation peut être localement modifiée sous l'effet d'un champ électrique de sorte à générer des motifs.

Une des solutions les plus courantes repose sur une composition contenant des micro capsules transparentes d'au moins deux types différents. Un premier type de micro capsules contient des particules d'une première couleur, typiquement des particules blanches et un deuxième type de micro capsules contient des particules d'une deuxième couleur, typiquement des particules noires. Ces particules, sous l'effet d'un champ électrique, s'alignent ou non sur une surface, en fonction de leur polarisation positive ou négative. Toutes les micro capsules d'un même type réagissent de la même manière sous l'effet du champ électrique. En fonction du champ électrique généré au niveau d'une surface donnée, les particules d'une couleur donnée sont attirées et les autres particules repoussées. La surface prend alors pour couleur la couleur des particules attirées.

L'encre électronique peut être « imprimée » sur une pellicule plastique qui, combinée à une couche de circuits, sert de papier électronique. Plusieurs entreprises proposent du papier électronique, parmi lesquelles l'entreprise américaine E-Ink Corporation, connue également sous le nom de E-Ink.

Dans la présente demande de brevet, on peut aussi bien utiliser de l'encre électronique que l'empilement de couches comprenant cette composition et servant de support à la composition. Cet empilement de couches est habituellement désigné « papier électronique ». Dans la présente invention l'encre électronique peut être substituée à du papier électronique et inversement.

De préférence, on déposera l'encre électronique directement sur la pièce à recouvrir dans le cadre de grandes séries. Cette solution est avantageuse en termes de coûts. En outre, elle offre une fiabilité améliorée pour la tenue de l'encre sur la pièce.

On utilisera de préférence un papier électronique que l'on collera sur la pièce à recouvrir dans le cadre de petites séries. En effet, cette solution ne nécessite pas d'investissement en termes d'outillages.

L'invention n'est pas limitée aux seuls motifs noirs sur fond blanc ou blancs sur fond noir mais s'étend à tous motifs de couleur. Elle s'étend également aux motifs présentant plusieurs couleurs.

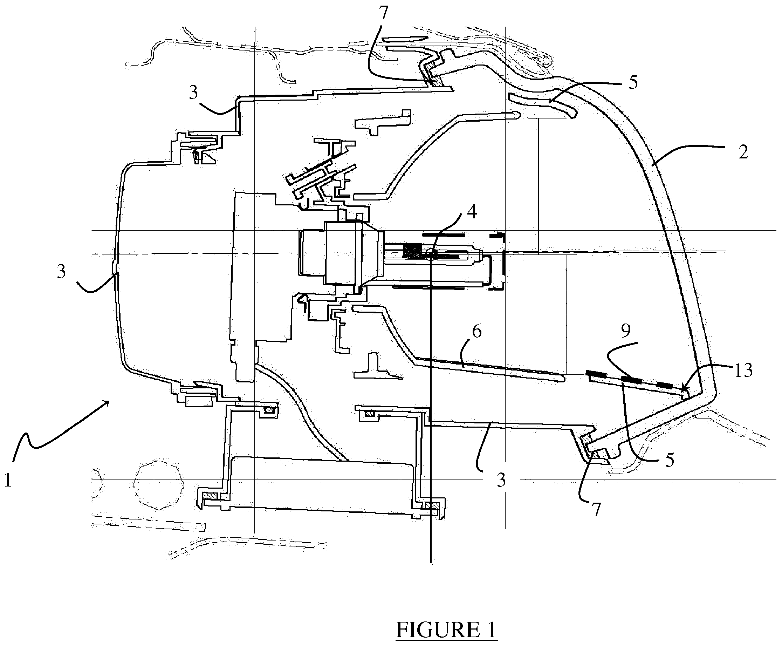

Sur la figure 1, est illustrée une unité optique 1. L'unité optique 1 comprend un boîtier 3 et une glace 2 qui coopère avec le boîtier 3 pour former une enceinte étanche. L'étanchéité peut être complétée au moyen de joints d'étanchéité 7. A l'intérieur de l'enceinte est logée au moins une source 4 de lumière. Seule une source 4 apparaît sur la vue en coupe. La source 4 est associée à un réflecteur 6. Un masque 5 est prévu. Il est disposé principalement entre la glace 2 et le réflecteur 6. Selon un mode de réalisation non illustré, une partie du masque 5 peut néanmoins s'étendre vers le fond de l'unité optique 1 en direction du boîtier 3. De manière générale, le masque 5 sert à occulter les composants de l'unité optique 1 à l'exception des parois internes du réflecteur 6.

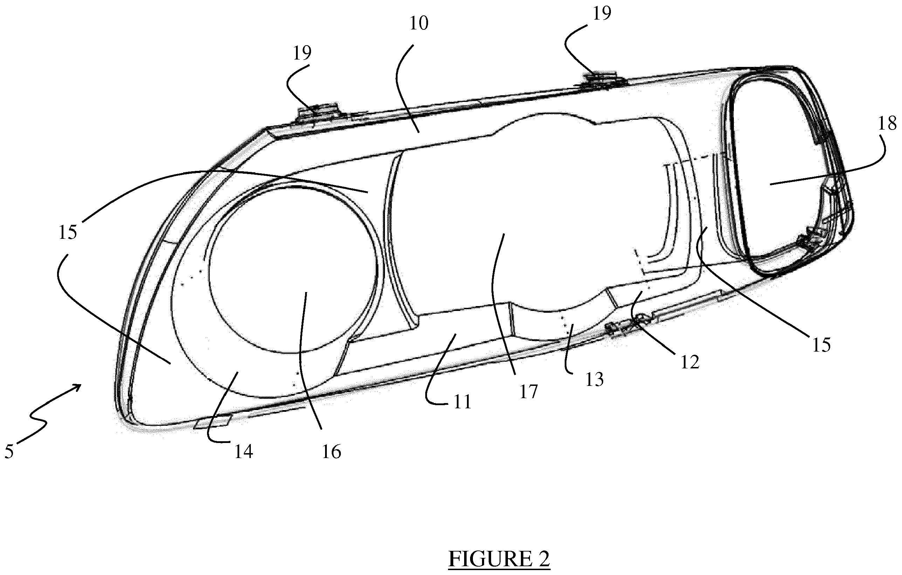

La figure 2 illustre plus en détail le masque 5. Ce dernier comprend trois ouvertures: une ouverture externe 16, une ouverture centrale 17 et une ouverture interne 18. Chaque ouverture est conformée pour recevoir un réflecteur 6 et au moins une source de lumière 4.

Le masque 5 s'étend sur le pourtour des ouvertures 16, 17, 18. Il présente une traverse supérieure située au-dessus des ouvertures 16, 17, 18 et formant une première portion 10. Il présente également une traverse inférieure située sous les ouvertures 16, 17, 18. Dans l'exemple illustré, cette traverse comprend une portion concave 13 disposée sensiblement au niveau du milieu de l'ouverture centrale 17 et deux portions 11, 12, sensiblement horizontales et planes disposées sous l'ouverture centrale et de part et d'autre de la portion 13. Une portion 14 est disposée sous l'ouverture externe 16. Elle est de forme sensiblement concave et forme le pourtour de l'ouverture externe 16.

Des parois intermédiaires s'étendent depuis les traverses supérieures et inférieures. Ces parois sont portent les références 15 sur la figure 2.

Ces parois 10, 11, 12, 13, 14, 15 sont visibles depuis l'extérieur de l'unité optique 1 lorsque le masque 5 est intégré dans cette dernière.

De manière caractéristique à l'invention, au moins l'une de ces parois est recouverte d'une encre électronique ou d'un papier électronique comme illustré en figure 1.

Ainsi, en programmant le papier électronique, il est possible de faire apparaître un motif 9 sur ces parois.

Les parois 10, 15 sont sensiblement perpendiculaires à la direction d'observation du véhicule. Un observateur situé à bonne distance du véhicule (plusieurs mètres typiquement) aura donc une bonne visibilité de ces parois et du motif 9 qu'elles peuvent porter.

Les parois 11, 12, 13, 14 s'étendent quant à elles essentiellement horizontalement et sont tournées vers le haut. Les surfaces, ainsi que les motifs qu'elles peuvent porter seront donc bien visibles pour un observateur situé à proximité immédiate du véhicule, typiquement à moins de cinq mètres. Tel serait le cas d'un piéton à côté d'un véhicule en stationnement.

De préférence, le masque comprend des moyens de fixation 19 pour faciliter son assemblage dans un sous-ensemble constitué par l'unité optique 1.

Plusieurs modes de réalisation peuvent être employés pour déposer l'encre électronique ou le papier électronique sur la pièce.

Selon un mode de réalisation, l'encre électronique est sous forme de papier électronique. Typiquement, l'encre est contenue entre plusieurs couches dont une couche transparente constituant une face externe et une autre couche constituant une face interne. Au moins l'une des deux couches est en contact avec au moins une électrode qui, lorsqu'elle est alimentée en électricité, peut générer un champ électrique permettant de localement attirer/repousser ou orienter un type donné de capsules contenant l'encre. La couche interne est fixée sur la paroi visible de la pièce, pièce qui est dans cet exemple non limitatif un masque 5 pour unité optique 1. Le papier est ainsi déposé directement sur la pièce. La fixation est obtenue par collage, par exemple au moyen d'une colle standard. Elle peut également être obtenue par soudure ou par surmoulage.

L'encre électronique est associée à des moyens de connexion électrique reliés aux électrodes permettant de générer le champ électrique dans l'encre électronique. Les moyens de connexion sont agencés pour coopérer avec des moyens de programmation. Typiquement, les moyens de programmation comprennent une unité de programmation comportant une interface utilisateur par laquelle il est possible de créer, choisir ou télécharger un motif. Ces moyens de programmation comprennent également des moyens de connexion complémentaires de ceux de la pièce.

En fonction de l'accessibilité des moyens de connexion plusieurs exemples de procédé de programmation peuvent être envisagés dans le cadre de l'invention.

Selon un premier mode de programmation, les moyens de connexion de la pièce sont rendus inaccessibles lorsque la pièce est assemblée avec un sous-ensemble du véhicule, le sous-ensemble étant typiquement une unité optique 1. Il n'est alors plus possible de modifier ou créer un motif après réalisation de l'unité optique 1. Cette dernière est par exemple configurée de sorte que son ouverture d'une manière permettant l'accès au moyens de connexion de la pièce provoque en partie sa rupture et/ou provoque la détérioration de son étanchéité.

Cet exemple de réalisation est particulièrement bien adapté pour des motifs constituant une homologation ou un marquage réglementaire qui ne doit pas pouvoir être modifié après fabrication de l'unité optique 1. De préférence, le procédé de programmation comprend alors une étape de réalisation du motif préalablement à la finalisation du sous-ensemble dans lequel l'encre électronique ou le papier électronique est intégré. Cette étape peut être réalisée alors que le papier électronique recouvre déjà la portion visible de la pièce. Avantageusement, cette étape de programmation est réalisée lorsque tous les composants de l'unité optique 1 sont prêts à être assemblés. Ainsi, il est possible d'adapter le marquage réglementaire en fonction de l'unité optique 1 prête à être réalisée afin de garantir une parfaite adéquation entre marquage et unité optique. Un motif portant un marquage européen sera donc associé à une pièce prête à être intégrée dans une unité optique 1 respectant la norme européenne ou destinée au marché européen. On évite ainsi un marquage ne correspondant pas aux normes de l'unité optique ou au marché de destination de cette dernière.

Ce premier mode de programmation selon lequel les moyens de connexion sont rendus inaccessibles lorsque la pièce est intégrée dans son sous-ensemble, permet une bonne personnalisation tout en évitant les inconvénients des solutions connues : étiquette propre à chaque motif, outillage dédié à chaque motif, gravure laser de chacun des motifs, etc. Par ailleurs, ce premier mode de programmation permet de simplifier considérablement l'étanchéité de l'unité optique 1 et d'empêcher la modification du motif ultérieurement à la fabrication du sous-ensemble intégrant la pièce recouverte en partie d'encre électronique.

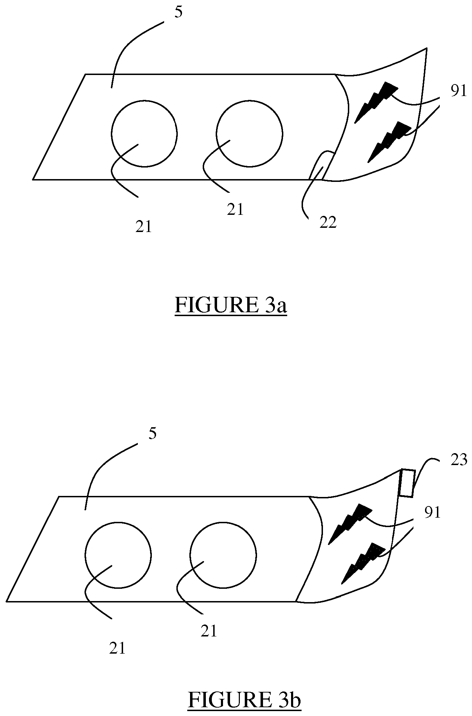

La figure 3a illustre un masque 5 selon ce premier mode de réalisation. Le masque 5 comporte deux ouvertures 21, 21 pour le passage de réflecteurs. Il comporte également une portion visible et recouverte en partie d'encre ou de papier électronique pour afficher un motif 91. Le masque 5 comprend en outre un connecteur 22, également désignée fiche, conformée pour coopérer avec un connecteur complémentaire également désigné fiche complémentaire. Dans cet exemple, le masque 5 est configuré de sorte qu'une fois l'unité optique assemblée, le connecteur 22 est inaccessible depuis l'extérieur de l'unité optique. La programmation du motif n'est ainsi pas possible sans à démonter cette dernière.

Selon un deuxième mode de programmation, la programmation du papier électronique ou de l'encre électronique est effectuée alors que le sous-ensemble est finalisé.

Selon une première option, les moyens de connexion sont accessibles alors que le sous-ensemble est finalisé. Par exemple, dans le cas d'une unité optique 1, les moyens de connexion comprennent un connecteur porté par le boîtier 3 et accessible depuis l'extérieur de l'unité optique.

Selon une deuxième option, le sous-ensemble peut être en partie au moins ouvert ou démonté pour accéder aux moyens de connexion, le temps d'effectuer la programmation et avant de le remonter. Typiquement, l'unité optique 1 peut être démontée du véhicule et ouverte pour accéder aux moyens de connexion puis refermée et réintégrée sur le véhicule.

Il est alors possible de programmer le motif lorsque l'unité optique 1 est achevée. Typiquement, l'étape de programmation comprend la mise en prise d'un connecteur de l'unité optique 1 avec un connecteur complémentaire des moyens de programmation puis une étape d'indication du motif à réaliser.

L'étape de programmation peut ainsi être réalisée en usine en fin de fabrication de l'unité optique 1. Elle peut également être réalisée chez un distributeur de l'unité optique 1, voir dans un garage équipé de moyens de programmation.

L'étape de programmation peut également être réalisée alors que le sous-ensemble intégrant le papier électronique ou l'encre électronique est assemblé sur le véhicule. L'étape de programmation peut ainsi être effectuée en fin de ligne de production du véhicule, par exemple chez un concessionnaire, dans un garage, voire par l'utilisateur du véhicule.

La figure 3b illustre un masque 5 selon ce premier mode de réalisation. Dans cet exemple, le masque 5 est configuré de sorte qu'une fois l'unité optique assemblée, le connecteur 23 demeure accessible depuis l'extérieur de l'unité optique. La programmation du motif peut ainsi être effectuée sans avoir à démonter cette dernière.

De préférence, le connecteur 23 comprend des moyens d'interfaçage à un ordinateur de type ordinateur personnel (habituellement désigné par l'acronyme PC). Par exemple, le connecteur comprend des ports USBs. Ainsi, la programmation des motifs à afficher est simple et ne nécessite pas d'équipement particulier. Il est ainsi possible d'effectuer la programmation en de nombreux sites sans nécessiter d'investissements prohibitifs.

Pour la programmation, on peut utiliser des moyens de programmation indépendants du véhicule. Typiquement, les moyens de programmation comprennent alors un ordinateur et une interface utilisateur pour définir le motif. Ils comprennent également des moyens de connexion complémentaires de ceux de l'unité optique 1. Les moyens de connexion sont par exemple accessibles en ouvrant le capot avant ou arrière du véhicule. De manière alternative, les moyens de programmation sont intégrés au véhicule. Le motif peut ainsi être programmé directement depuis l'interface du véhicule. De préférence, les moyens de connexion du papier électronique ou de l'encre électronique sont configurés pour être connectés au bus du véhicule.

Ce deuxième mode de réalisation permet une très forte personnalisation des motifs puisque la programmation est effectuée en fin de fabrication de l'unité optique 1, voire en fin de fabrication du véhicule, voire encore à tout instant de la vie du véhicule.

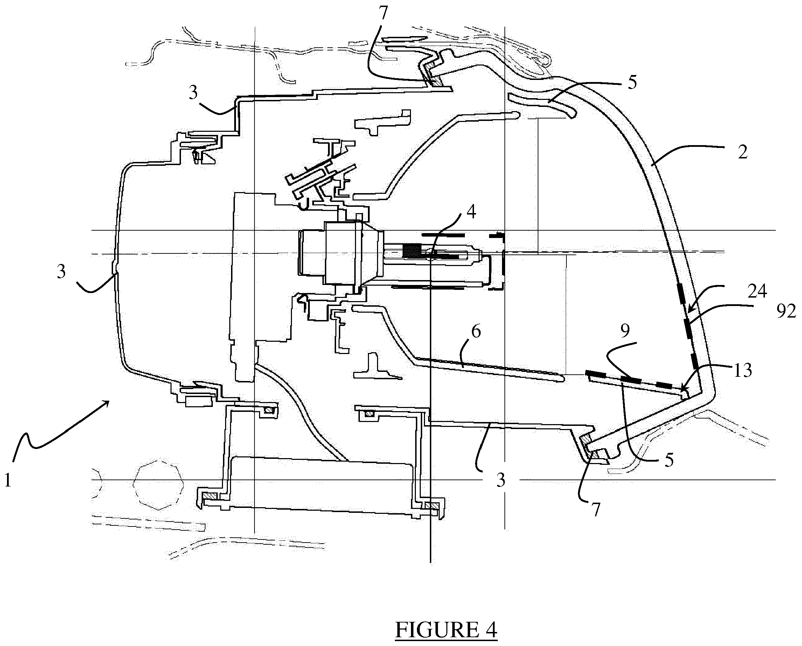

La figure 4 illustre un projecteur dans lequel la glace 2 comporte une portion 24 visible depuis l'extérieur de l'unité optique et recouverte au moins en partie d'encre ou de papier électronique. De préférence, l'encre ou le papier électronique est déposée sur une face interne de la glace 2. Le motif 92 affiché peut être un motif décoratif ou un marquage réglementaire. Sur cet exemple, le masque 5 porte également un ou plusieurs motifs 9.

Selon un mode de réalisation avantageux, la pièce recouverte d'encre ou de papier électronique ou le sous ensemble l'intégrant (unité optique par exemple) comprend une carte électronique permettant d'autoriser ou d'empêcher la modification des motifs. Cela peut être effectué en fonction de restrictions prédéfinies. La carte électronique peut également être configurée pour autoriser les modifications de motifs si au moins l'une des actions suivantes est effectuée avec succès : entrée d'un code confidentiel, reconnaissance d'une carte sécurisée, reconnaissance d'un matériel donné, vérification d'un agrément.

Ainsi il est possible de limiter la possibilité de modifier les motifs à un ensemble donné de garages ou agents agrées.

Selon un mode de réalisation non illustré, l'encre ou le papier électronique peut être disposé en partie au moins sur le boîtier du projecteur.

Au vu de la description qui précède, il apparaît clairement que l'invention permet d'améliorer significativement les possibilités de personnalisation des pièces de véhicule tout en limitant les coûts associés.

## Revendications

1. Unité optique (1) comprenant au moins une pièce de véhicule automobile comprenant au moins une portion (10, 11, 12, 13, 14, 15, 24) visible depuis l'extérieur de la pièce, la portion (10, 11, 12, 13, 14, 15, 24) étant en partie au moins recouverte d'une encre électronique apte à former un motif (9, 91, 92) sur la portion (10, 11, 12, 13, 14, 15, 24), la pièce étant intégrée dans l'unité optique (1), l'unité optique étant apte à assurer une fonction de signalisation ou une fonction d'éclairage pour le véhicule,
l'unité optique étant **caractérisée en ce que** a pièce forme un masque (5) pour l'unité optique (1) ou une partie au moins d'une glace (2) de protection de l'unité optique (1) ou un boîtier (3) pour l'unité optique (1), et **en ce que** la portion visible (10, 11, 12, 13, 14, 15, 24) est agencée pour participer uniquement à l'aspect esthétique de l'unité, c'est-à-dire que la portion visible ne participe pas à la fonction de signalisation ou d'éclairage.

2. Unité optique (1) selon la revendication précédente, dans laquelle l'encre électronique est agencée sous forme de papier électronique.

3. Unité optique (1) selon la revendication précédente, dans laquelle la pièce est un masque qui (5) comprend au moins une ouverture (16, 17, 18) conformée pour loger au moins en partie une source lumineuse (4) et un système optique (6) associé à la source lumineuse (4).

4. Unité optique (1) selon l'une quelconque des revendications précédentes, la pièce comprenant des moyens de connexion associés à l'encre électronique et adaptés pour coopérer avec des moyens de programmation configurés pour créer ou modifier le motif (9, 91, 92) formé par l'encre électronique.

5. Unité optique (1) selon l'une quelconque des revendications précédentes, la pièce comprenant une carte électronique ou un boîtier électronique configuré pour effectuer un contrôle d'accès de sorte à empêcher ou autoriser la création ou la modification du motif (9, 91, 92).

6. Unité optique (1) selon l'une quelconque des revendications précédentes, la pièce comprenant une carte électronique et des ports configurés pour permettre un interfaçage avec un ordinateur.

7. Unité optique (1) selon l'une quelconque des revendications précédentes, dans lequel l'encre définit un motif (9, 91, 92) comprenant au moins l'un parmi : une homologation, un marquage réglementaire, un logo, un signe abstrait, un signe concret, un chiffre, une lettre.

8. Unité optique (1) selon l'une quelconque des revendications précédentes, comprenant un boîtier (3) coopérant avec une glace (2) pour loger au moins une source de lumière (4) ainsi qu'au moins un masque (5) et dans lequel la paroi (10, 11, 12, 13, 14, 15) recouverte par l'encre électronique est portée par la pièce qui est soit le masque (5), soit la glace (2), soit le boîtier (3)

9. Unité optique (1) selon l'une quelconque des revendications précédentes, la pièce comprenant des moyens de connexion connectés à l'encre électronique, les moyens de connexion comprenant un connecteur conformé pour être connecté à des moyens de programmation de sorte à pouvoir programmer par l'intermédiaire des moyens de programmation le motif (9, 91, 92) à afficher et dans laquelle les moyens de connexion sont inaccessibles depuis l'extérieur de l'unité optique (1).

10. Unité optique (1) selon l'une quelconque des revendications précédentes, la pièce comprenant des moyens de connexion connectés à l'encre électronique, les moyens de connexion comprenant un connecteur (22, 23) conformé pour être connecté à des moyens de programmation de sorte à pouvoir programmer par l'intermédiaire des moyens de programmation le motif (9, 91, 92) à afficher par l'encre électronique et dans laquelle les moyens de connexion sont accessibles depuis l'extérieur de l'unité optique (1).

11. Unité optique (1) selon la revendication précédente, dans laquelle le connecteur (22, 23) forme une fiche portée par le boîtier et adaptée pour être connectée à une fiche complémentaire des moyens de programmation.

12. Unité optique (1) selon l'une quelconque des deux revendications précédentes, dans laquelle le connecteur (22, 23) est conformé pour être connecté à un bus du véhicule automobile.

13. Véhicule automobile comprenant une unité optique (1) selon l'une quelconque de revendications 1 à 12

14. Procédé de fabrication d'une unité optique de véhicule automobile selon l'une quelconque des revendications 1 à 12, la pièce comportant des moyens de connexion conformés pour coopérer avec des moyens de programmation, le procédé comprenant : une étape de connexion des moyens de connexion avec des moyens de programmation ; une étape de programmation de l'encre électronique de sorte à faire apparaître sur la portion (10, 11, 12, 13, 14, 15, 24) un motif (9, 91, 92) ; une étape d'intégration de la pièce dans un sous-ensemble, l'étape d'intégration étant réalisée avant ou après les étapes de connexion et de programmation.

15. Procédé de fabrication d'une unité optique de véhicule automobile selon la revendication précédente dans lequel l'étape d'intégration de la pièce dans un sous-ensemble est réalisée après les étapes de connexion et de programmation et de manière à ce qu'au terme de l'étape d'intégration les moyens de connexion sont rendus inaccessibles depuis l'extérieur du sous-ensemble.

16. Procédé de fabrication d'une unité optique de véhicule automobile selon l'une quelconque des deux revendications précédentes dans lequel l'étape d'intégration de la pièce dans un sous-ensemble est effectuée de manière à ce que l'accès aux moyens de connexion altère irréversiblement le sous-ensemble.

17. Procédé de fabrication d'une unité optique de véhicule automobile selon la revendication 14 dans lequel l'étape d'intégration de la pièce dans un sous-ensemble est réalisée de manière à ce qu'au terme de l'étape d'intégration les moyens de connexion sont rendus accessibles depuis l'extérieur du sous-ensemble.

18. Procédé de fabrication d'un véhicule automobile comprenant une unité optique de véhicule automobile selon l'une quelconque des revendications 14 à 17 dans lequel l'étape de programmation est réalisée avant finalisation du véhicule.

19. Procédé de fabrication d'un véhicule automobile comprenant une unité optique de véhicule automobile selon l'une quelconque des revendications 14 à 17 dans lequel l'étape de programmation est effectuée après finalisation du véhicule.

## Patentansprüche

1. Optische Einheit (1), welche wenigstens ein Kraftfahrzeugteil umfasst, das wenigstens einen Abschnitt (10, 11, 12, 13, 14, 15, 24) umfasst, der von außerhalb des Teils sichtbar ist, wobei der Abschnitt (10, 11, 12, 13, 14, 15, 24) wenigstens teilweise von einer elektronischen Tinte bedeckt ist, die geeignet ist, ein Muster (9, 91, 92) auf dem Abschnitt (10, 11, 12, 13, 14, 15, 24) zu bilden, wobei das Teil in die optische Einheit (1) integriert ist, wobei die optische Einheit geeignet ist, eine Signalisierungsfunktion oder eine Beleuchtungsfunktion für das Fahrzeug zu erzeugen,
wobei die optische Einheit **dadurch gekennzeichnet ist, dass** das Teil eine Maske (5) für die optische Einheit (1) oder wenigstens einen Teil einer Schutzscheibe (2) der optischen Einheit (1) oder ein Gehäuse (3) für die optische Einheit (1) bildet, und dadurch, dass der sichtbare Abschnitt (10, 11, 12, 13, 14, 15, 24) dafür ausgelegt ist, ausschließlich zum ästhetischen Aussehen der Einheit beizutragen, das heißt, dass der sichtbare Abschnitt nicht an der Signalisierungs- oder Beleuchtungsfunktion beteiligt ist.

2. Optische Einheit (1) nach dem vorhergehenden Anspruch, wobei die elektronische Tinte in Form von elektronischem Papier ausgebildet ist.

3. Optische Einheit (1) nach dem vorhergehenden Anspruch, wobei das Teil eine Maske (5) ist, welche wenigstens eine Öffnung (16, 17, 18) umfasst, die dafür ausgebildet ist, wenigstens teilweise eine Lichtquelle (4) und ein der Lichtquelle (4) zugeordnetes optisches System (6) aufzunehmen.

4. Optische Einheit (1) nach einem der vorhergehenden Ansprüche, wobei das Teil Verbindungsmittel umfasst, die der elektronischen Tinte zugeordnet sind und dafür eingerichtet sind, mit Programmiermitteln zusammenzuwirken, die dafür ausgelegt sind, das von der elektronischen Tinte gebildete Muster (9, 91, 92) zu erzeugen oder zu ändern.

5. Optische Einheit (1) nach einem der vorhergehenden Ansprüche, wobei das Teil eine Leiterplatte oder eine Elektronikeinheit umfasst, die dafür ausgelegt ist, eine Zugangskontrolle durchzuführen, um die Erzeugung oder die Änderung des Musters (9, 91, 92) zu verhindern oder zu gestatten.

6. Optische Einheit (1) nach einem der vorhergehenden Ansprüche, wobei das Teil eine Leiterplatte und Anschlüsse, die dafür ausgelegt sind, eine Kopplung mit einem Computer zu ermöglichen, umfasst.

7. Optische Einheit (1) nach einem der vorhergehenden Ansprüche, wobei die Tinte ein Muster (9, 91, 92) definiert, das wenigstens eines umfasst von: einer Zulassung, einer obligatorischen Kennzeichnung, einem Logo, einem abstrakten Zeichen, einem konkreten Zeichen, einer Ziffer, einem Buchstaben.

8. Optische Einheit (1) nach einem der vorhergehenden Ansprüche, welche ein Gehäuse (3) umfasst, das mit einer Scheibe (2) zusammenwirkt, um wenigstens eine Lichtquelle (4) sowie wenigstens eine Maske (5) aufzunehmen, und wobei die mit der elektronischen Tinte bedeckte Wand (10, 11, 12, 13, 14, 15) von dem Teil getragen wird, welches entweder die Maske (5) oder die Scheibe (2) oder das Gehäuse (3) ist.

9. Optische Einheit (1) nach einem der vorhergehenden Ansprüche, wobei das Teil Verbindungsmittel umfasst, die mit der elektronischen Tinte verbunden sind, wobei die Verbindungsmittel einen Verbinder umfassen, der dafür ausgelegt ist, mit Programmiermitteln verbunden zu werden, um über die Programmiermittel das anzuzeigende Muster (9, 91, 92) programmieren zu können, und wobei die Verbindungsmittel von außerhalb der optischen Einheit (1) nicht zugänglich sind.

10. Optische Einheit (1) nach einem der vorhergehenden Ansprüche, wobei das Teil Verbindungsmittel umfasst, die mit der elektronischen Tinte verbunden sind, wobei die Verbindungsmittel einen Verbinder (22, 23) umfassen, der dafür ausgelegt ist, mit Programmiermitteln verbunden zu werden, um über die Programmiermittel das durch die elektronische Tinte anzuzeigende Muster (9, 91, 92) programmieren zu können, und wobei die Verbindungsmittel von außerhalb der optischen Einheit (1) zugänglich sind.

11. Optische Einheit (1) nach dem vorhergehenden Anspruch, wobei der Verbinder (22, 23) einen Stecker bildet, der von dem Gehäuse getragen wird und dafür eingerichtet ist, mit einem komplementären Stecker der Programmiermittel verbunden zu werden.

12. Optische Einheit (1) nach einem der zwei vorhergehenden Ansprüche, wobei der Verbinder (22, 23) dafür ausgebildet ist, mit einem Bus des Kraftfahrzeugs verbunden zu werden.

13. Kraftfahrzeug, welches eine optische Einheit (1) nach einem der Ansprüche 1 bis 12 umfasst.

14. Verfahren zur Herstellung einer optischen Einheit eines Kraftfahrzeugs nach einem der Ansprüche 1 bis 12, wobei das Teil Verbindungsmittel aufweist, die dafür ausgebildet sind, mit Programmiermitteln zusammenzuwirken, wobei das Verfahren umfasst: einen Schritt der Verbindung der Verbindungsmittel mit den Programmiermitteln; einen Schritt der Programmierung der elektronischen Tinte, um auf dem Abschnitt (10, 11, 12, 13, 14, 15, 24) ein Muster (9, 91, 92) erscheinen zu lassen; einen Schritt der Integration des Teils in eine Unterbaugruppe, wobei der Schritt der Integration vor oder nach den Schritten der Verbindung und der Programmierung ausgeführt wird.

15. Verfahren zur Herstellung einer optischen Einheit eines Kraftfahrzeugs nach dem vorhergehenden Anspruch, wobei der Schritt der Integration des Teils in eine Unterbaugruppe nach den Schritten der Verbindung und der Programmierung ausgeführt wird, und derart, dass am Ende des Schrittes der Integration die Verbindungsmittel von außerhalb der Unterbaugruppe unzugänglich gemacht worden sind.

16. Verfahren zur Herstellung einer optischen Einheit eines Kraftfahrzeugs nach einem der zwei vorhergehenden Ansprüche, wobei der Schritt der Integration des Teils in eine Unterbaugruppe derart durchgeführt wird, dass der Zugang zu den Verbindungsmitteln die Unterbaugruppe irreversibel verändert.

17. Verfahren zur Herstellung einer optischen Einheit eines Kraftfahrzeugs nach Anspruch 14, wobei der Schritt der Integration des Teils in eine Unterbaugruppe derart ausgeführt wird, dass am Ende des Schrittes der Integration die Verbindungsmittel von außerhalb der Unterbaugruppe zugänglich gemacht worden sind.

18. Verfahren zur Herstellung eines Kraftfahrzeugs, welches eine optische Einheit eines Kraftfahrzeugs nach einem der Ansprüche 14 bis 17 umfasst, wobei der Schritt der Programmierung vor der Fertigstellung des Fahrzeugs ausgeführt wird.

19. Verfahren zur Herstellung eines Kraftfahrzeugs, welches eine optische Einheit eines Kraftfahrzeugs nach einem der Ansprüche 14 bis 17 umfasst, wobei der Schritt der Programmierung nach der Fertigstellung des Fahrzeugs durchgeführt wird.

## Claims

1. Optical unit (1) comprising at least one motor vehicle part comprising at least one portion (10, 11, 12, 13, 14, 15, 24) visible from the outside of the part, the portion (10, 11, 12, 13, 14, 15, 24) being at least partly covered with an electronic ink capable of forming a pattern (9, 91, 92) on the portion (10, 11, 12, 13, 14, 15, 24), the part being incorporated in the optical unit (1), the optical unit being able to ensure a signalling function or a lighting function for the vehicle, the optical unit being **characterized in that** the part forms a mask (5) for the optical unit (1) or at least a part of a protective outer lens (2) of the optical unit (1) or a housing (3) for the optical unit (1), and **in that** the visible portion (10, 11, 12, 13, 14, 15, 24) is arranged to participate only in the aesthetic aspect of the unit, that is to say that the visible portion does not participate in the signalling or lighting function.

2. Optical unit (1) according to the preceding claim, wherein the electronic ink is arranged in the form of electronic paper.

3. Optical unit (1) according to the preceding claim, wherein the part is a mask (5) which comprises at least one aperture (16, 17, 18) adapted to at least partly house a light source (4) and an optical system (6) associated with the light source (4).

4. Optical unit (1) according to any one of the preceding claims, the part comprising connection means associated with the electronic ink and suitable for cooperating with programming means configured to create or modify the pattern (9, 91, 92) formed by the electronic ink.

5. Optical unit (1) according to any one of the preceding claims, the part comprising an electronic circuit board or an electronic housing configured to provide access control so as to prevent or allow the creation or the modification of the pattern (9, 91, 92).

6. Optical unit (1) according to any one of the preceding claims, the part comprising an electronic circuit board and ports configured to allow interfacing with a computer.

7. Optical unit (1) according to any one of the preceding claims, wherein the ink defines a pattern (9, 91, 92) comprising at least one out of: a type approval, a regulatory marking, a logo, an abstract symbol, a concrete symbol, a digit, a letter.

8. Optical unit (1) according to any one of the preceding claims, comprising a housing (3) cooperating with an outer lens (2) to house at least one light source (4) and at least one mask (5) and wherein the wall (10, 11, 12, 13, 14, 15) covered by the electronic ink is borne by the part which is either the mask (5), or the outer lens (2), or the housing (3).

9. Optical unit (1) according to any one of the preceding claims, the part comprising connection means connected to the electronic ink, the connection means comprising a connector adapted to be connected to programming means so as to be able to program, via the programming means, the pattern (9, 91, 92) to be displayed and wherein the connection means are inaccessible from the outside of the optical unit (1).

10. Optical unit (1) according to any one of the preceding claims, the part comprising connection means connected to the electronic ink, the connection means comprising a connector (22, 23) adapted to be connected to programming means so as to be able to program, via the programming means, the pattern (9, 91, 92) to be displayed by the electronic ink and wherein the connection means are accessible from the outside of the optical unit (1).

11. Optical unit (1) according to the preceding claim, wherein the connector (22, 23) forms a plug borne by the housing and suitable for connection to a complementary plug of the programming means.

12. Optical unit (1) according to either one of the two preceding claims, wherein the connector (22, 23) is adapted to be connected to a bus of the motor vehicle.

13. Motor vehicle comprising an optical unit (1) according to any one of Claims 1 to 12.

14. Method for manufacturing an optical unit of a motor vehicle according to any one of Claims 1 to 12, the part comprising connection means adapted to cooperate with programming means, the method comprising: a step of connection of the connection means with programming means; a step of programming the electronic ink so as to show, on the portion (10, 11, 12, 13, 14, 15, 24), a pattern (9, 91, 92); a step of incorporation of the part in a subassembly, the incorporation step being performed before or after the connection and programming steps.

15. Method for manufacturing an optical unit of a motor vehicle according to the preceding claim, wherein the step of incorporation of the part in a subassembly is performed after the connection and programming steps and in such a way that, at the end of the incorporation step, the connection means are rendered inaccessible from the outside of the subassembly.

16. Method for manufacturing an optical unit of a motor vehicle according to either one of the two preceding claims, wherein the step of incorporation of the part in a subassembly is performed in such a way that the access to the connection means irreversibly alters the subassembly.

17. Method for manufacturing an optical unit of a motor vehicle according to Claim 14, wherein the step of incorporation of the part in a subassembly is performed in such a way that, at the end of the incorporation step, the connection means are rendered accessible from the outside of the subassembly.

18. Method for manufacturing a motor vehicle comprising an optical unit of a motor vehicle according to any one of Claims 14 to 17, wherein the programming step is performed before finalization of the vehicle.

19. Method for manufacturing a motor vehicle comprising an optical unit of a motor vehicle according to any one of Claims 14 to 17, wherein the programming step is performed after finalization of the vehicle.
